# EUROPEAN PATENT APPLICATION

(11) **EP 1 749 444 A1**
(43) Date of publication of application: **07.02.2007**
(21) Application number: 05425580.7
(22) Date of filing: 04.08.2005
(51) Int. Cl.: A22C 11/00

(54) **Multiple outlet extruder for pump for feeding ground meat or the like**

(71) Applicant: REFIN S.r.l., 36100 Vicenza (IT)
(72) Inventor: Righele, Giovanni Battista, 36010 Zane' (VI) (IT)
(74) Representative: Mittler, Enrico

(57) **Abstract**

A multiple outlet extruder (1) for a pump (2) for feeding of ground meat or the like is described. The extruder comprises a distribution chamber (4) for a single continuous flow of product coming from the pump, a plurality of outlet orifices (10) for single flows from said chamber (4) and a plurality of tubes (11) for connection of said orifices (10) with respective parallel channels (12) of a product shaper (13) making up the outlet of the extruder (1). In order to make the flows of product outflowing from the extruder (1) equal, the distribution chamber (4) is provided of a static body (7) for stabilization and equalization of pressure and the orifices (10) of the distribution chamber (4), the connection tubes (11) and the channels (12) of the product shaper (13) have longitudinal and transversal dimensions equal to each other. The tubes (11) can have paths with curvatures equal to each other. The shaper (13) can comprise a knife (14) operating at the outlet of the channels (12) for the separation of each one of the single flows into single portions of product (16) which follow one another.

## Description

The present invention concerns a multiple outlet extruder for pump for feeding ground meat or the like.

The kown feeding pumps for the formation of sausages and the like feed ground meat in pressure inside an extruder with a single outlet (usually called "sacking cone") from which a continuous flow of material outflows which gets then subdivided into single portions.

In some cases, in particular for the production of sausages without peel, the extruder is provided with several parallel outlets, which allow to divide the single flow of large diameter material outflowing from the pump into a plurality of parallel flows having smaller diameter, from which then rows of single sausages placed side by side originate.

The problem with such multiple outlet extruders is to make the single flows equal to each other so as to obtain sausages having the same size and the same consistency.

Currently there are flow regulation systems of the oleodynamic type or with gears or of the radial eccentric pump type or with flow restrictors, which however have the disadvantage of being complicated, large in volume, expensive and sometimes not very reliable.

Object of the present invention is to provide a multiple outlet extruder which allows to obtain parallel flows of product equal to each other in absolutely simple and inexpensive way and without the use of additional machinery.

According to the present invention such object is attained with an extruder comprising a distribution chamber for a single continuous flow of product coming from the pump, a plurality of outlet orifices for single flows from said chamber and a plurality of tubes for connection of said orifices with respective parallel channels of a product shaper making up the outlet of the extruder, characterised in that said distribution chamber is provided with a static body for stabilization and equalization of the pressure and said orifices, said connection tubes and said channels of the product shaper have longitudinal and transversal dimensions equal to each other.

Owing to the presence of the stabilization and equalization device, which allows to stabilize and to make uniform the pressure of the flow of product out of the pump, and to the use of orifices, connection tubes and channels of the shaper having the same longitudinal and transversal dimensions, the extruder according to the invention allows to obtain in a simple, safe and inexpensive way parallel flows of product equal to each other, which can then cause by cutting the formation of single sausages or the like, still equal to each other, which follow one after the other in parallel rows.

The characteristics of the present invention will be better understood after reading the following detailed description of a possible embodiment shown as a non-limiting example in the enclosed drawings, in which:
Figure 1 shows an extruder according to the present invention in top plan;
Figure 2 shows the same extruder in longitudinal section according to line II-II in Figure 1;
Figure 3 shows said extruder in transversal section according to line III-III in Figure 2;
Figure 4 shows said extruder in transversal section according to line IV-IV in Figure 2;
Figure 5 shows said extruder as shown from the left as regards Figure 2;
Figure 6 shows the extruder in top plan in the step of extrusion of parallel rows of cut products placed side by side.

The extruder shown in the drawings, where it is indicated as a whole by the numerical reference 1, is meant to be located at the outlet of a pump 2, of a type known per se, which feeds a single continuous flow of ground meat or other similar product through a tube 3. The extruder comprises a chamber 4 for the distribution of the flow, which receives the tube 3 on its back and it is frontally closed by a pierced plate 5 which is held in position by a fastening ring nut 6.

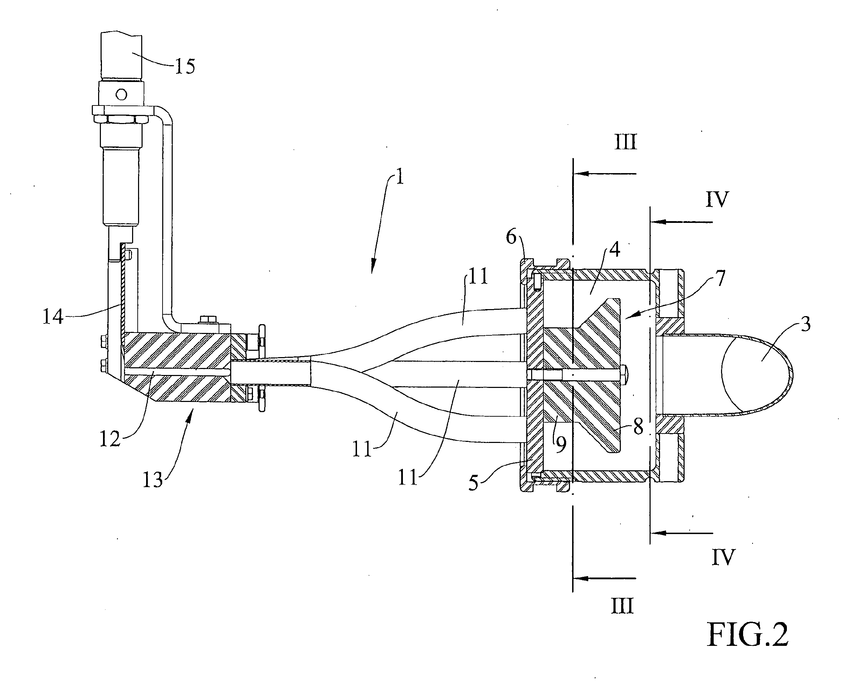

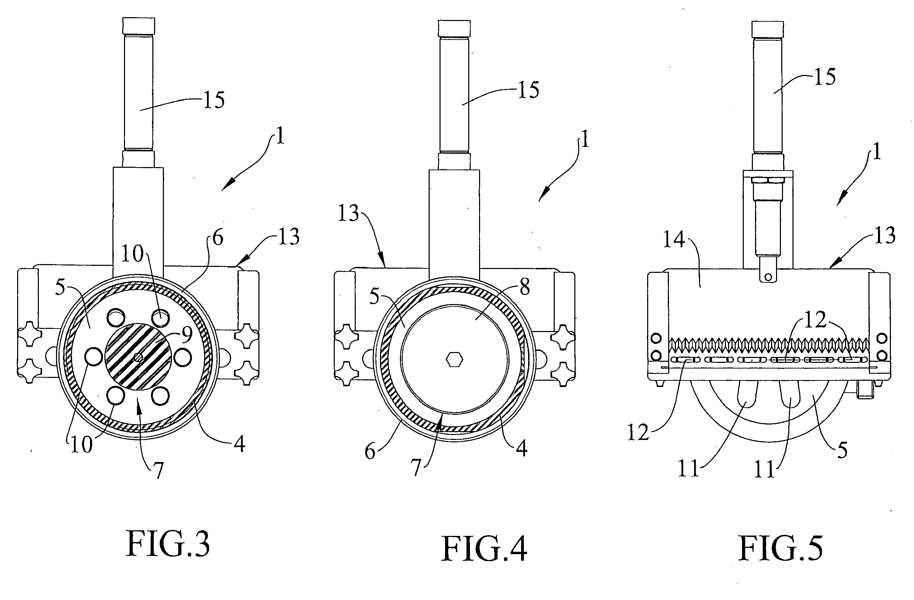

As shown in Figure 2, inside the distribution chamber 4 a static body 7 approximately with the shape of a mushroom with a truncated-conical head 8 (Figure 4) facing towards the tube 3 and a stem 9 (Figure 3) facing towards the plate 5 is centrally placed and fastened to the pierced plate 5.

The body 7 has the task to stabilize and to equalise the pressure of the product inside the chamber 5.

As shown in Figure 3, the plate 5 is passed through by a plurality of circular outlet orifices 10, all having the same diameter, arranged at equally distanced positions along a circumference which surrounds the stem 8 of the body 7 but not its head 8 (Figure 4). If desired, the orifices 10 can be located on various circumferences.

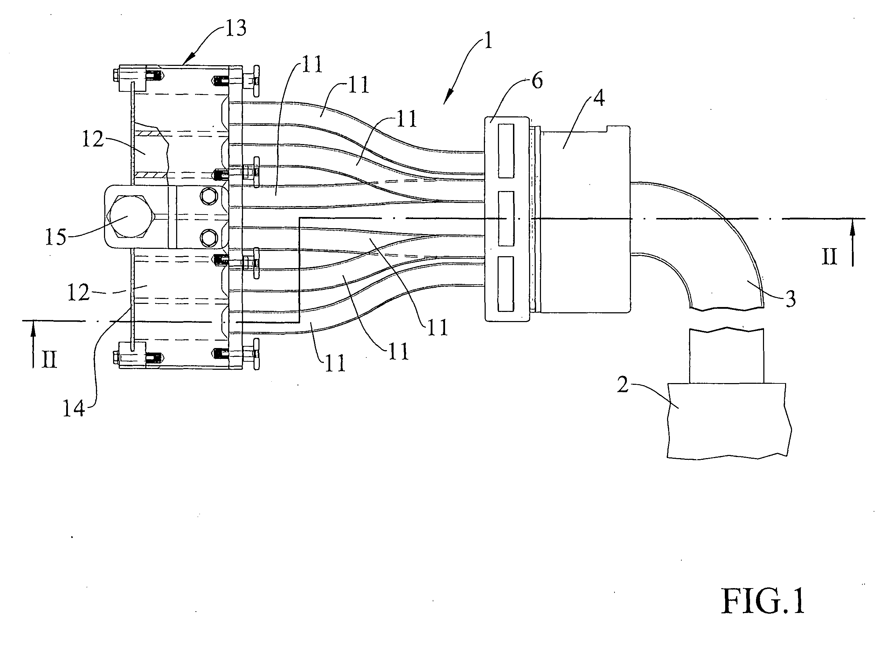

From the orifices 10 respective tubes 11 dipart (Figures 1, 2 and 6), all having the same transversal section and the same length and curved exactly in the same way, which by coiling up reach the inlets of respective parallel channels 12 of a product shaper 13 which is the outlet of the extruder.

The channels 12 all have the same transversal and longitudinal dimensions.

At the outlet of the shaper 13 a knife 14 common to all channels 12 (Figure 5) operates, which is actuated by a pneumatic cylinder 15.

Due to the structure above described, the extruder 1 receives from the pump 2 a single continuous flow of product, whose pressure gets stabilized and equalised in the chamber 4 owing to the central static body 7.

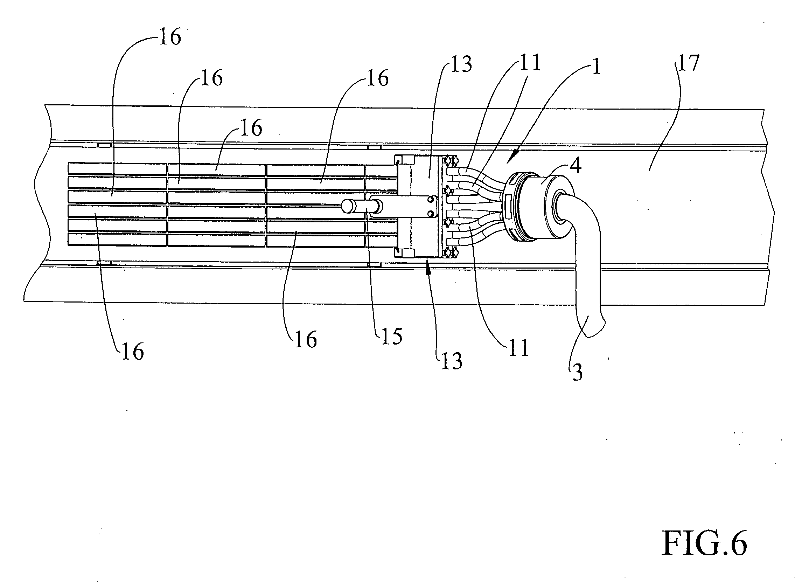

Owing to the orifices 10 of the plate 5 and to the aforesaid subsequent tubes 11 the single flow of product is divided into a plurality of single flows, all equal to each other, which reach the channels 12 of the shaper 13, at the outlet of which, if desired, a knife 14 performs the cut of the same flows in respective sequences of sausages or similar portions of product 16, all equal to each other, which are transported away by a conveyor belt 17, as schematically shown in Figure 6.

## Claims

1. Multiple outlet extruder (1) for pump (2) for feeding of ground meat or the like, comprising a distribution chamber (4) for a single continuous flow of product coming from the pump, a plurality of outlet orifices (10) for single flows from said chamber (4) and a plurality of tubes (11) for connection of said orifices (10) with respective parallel channels (12) of a product shaper (13) making up the outlet of the extruder (1), **characterised in that** said distribution chamber (4) is provided with a static body (7) for stabilization and equalization of the pressure and said orifices (10), said connection tubes (11) and said channels (12) of the product shaper have longitudinal and transversal dimensions equal to each other.

2. Extruder according to claim 1, **characterised in that** said tubes (11) have paths with curvatures equal to each other.

3. Extruder according to claim 1 or 2, **characterised in that** said static body (7) has approximately a shape of a mushroom with a truncated-conical head (8) facing toward the entrance of the product from the pump (2) and a stem (9) centrally fastened to a pierced plate (5) transversed by said orifices (10).

4. Extruder according to claim 3, **characterised in that** said orifices (10) are arranged in equally distanced positions along at least one circumference that surrounds the stem (9) of said static body (7) but not its head (8).

5. Extruder according to any one of the previous claims, **characterised in that** said shaper (13) comprises a knife (14) operating at the outlet of said channels (12) for the separation of each one of said single flows in single portions of product (16) which follow one another.
